## Europäisches Patentamt
## European Patent Office
## Office européen des brevets

(19)

(11) Veröffentlichungsnummer: **0 155 650**
**A2**

(12) **EUROPÄISCHE PATENTANMELDUNG**

(21) Anmeldenummer: **85102999.1**

(22) Anmeldetag: **15.03.85**

(51) Int. Cl.⁴: **G 09 B 29/08**

(30) Priorität: **20.03.84 DE 8408467 U**

(43) Veröffentlichungstag der Anmeldung:
**25.09.85 Patentblatt 85/39**

(84) Benannte Vertragsstaaten:
**AT BE CH DE FR GB IT LI LU NL SE**

(71) Anmelder: **Stiefel, Heinrich**
**Fichtenstrasse 9**
**D-8071 Ernsgaden(DE)**

(72) Erfinder: **Stiefel, Heinrich**
**Fichtenstrasse 9**
**D-8071 Ernsgaden(DE)**

(74) Vertreter: **Neubauer, Hans-Jürgen, Dipl.-Phys.**
**Fauststrasse 30**
**D-8070 Ingolstadt(DE)**

(54) **Wandhängekarten, insbesondere Landkarten, sowie Lehr- und Lerntafeln für Schulen.**

(57) Die Erfindung betrifft Wandhängekarten, insbesondere Landkarten, sowie Lehr- und Lerntafeln für Schulen mit einer wenigstens einseitig bedruckten Papierbahn und mit an gegenüberliegenden Seiten der Papierbahn angebrachten, mit der Papierbahn verbundenen und sich etwa über die gesamte Seitenlänge erstreckenden Stäben, wovon ein Stab mit einer Aufhängevorrichtung versehen ist. Solche Wandhängekarten reißen an den Stäben leicht ein, bekommen Knickfalten und werden durch Verschmutzung und Verschleiß unansehnlich und unbrauchbar. Bei einem Daueraushang bleichen die Farben besonders bei Sonneneinstrahlung schnell aus. Erfindungsgemäß wird daher auf die Papierbahn (7) an ihrer Vorder- und Rückseite je eine Deckschicht (8, 9) aus durchsichtigem und flexiblen Kunststoff aufkaschiert. Dadurch werden Wandhängekarten von hohem Gebrauchswert wegen der hohen Reißfestigkeit und dem Schutz gegen Ausbleichen und Verschmutzen erzielt. Zudem kann auf den Wandhängekarten mit Folienstiften geschrieben werden

FIG. 2   (A-A)

EP 0 155 650 A2

# DIPL.-PHYS. HANS-J. NEUBAUER

## EUROPEAN PATENT ATTORNEY

**0155650**

Herr

Heinrich Stiefel

Fichtenstr. 9

8071 Ernsgaden

Fauststraße 30
D-8070 Ingolstadt

Telefon (08 41) 7 24 12
Telegramm neupat Ingolstadt
Telex 5 5809 nepa d

P 69ST 85/13

---

Wandhängekarten, insbesondere Landkarten, sowie
Lehr- und Lerntafeln für Schulen

---

Die Erfindung betrifft Wandhängekarten, insbesondere Landkarten, sowie Lehr- und Lerntafeln für Schulen gemäß dem
Oberbegriff des Anspruchs 1.

Trotz einer Fülle moderner Lehrmittel (audio-visuelle
Einrichtungen, Dias, Video etc.) hat die altbewährte
Wandhängekarte, insbesondere als Landkarte und Lehr- und
Lerntafel, in Schulen keineswegs an Aktualität verloren.
Der Grund dafür liegt im wesentlichen in der einfachen
Handhabung, ständigen Präsenz und den relativ geringen
Kosten.

Eine Wandhängekarte für Schulen besteht in der Regel aus
der eigentlichen Karte oder Tafel aus einem zusammenrollbaren Material, die an ihrer oberen und unteren Seite mit
einem durchgehenden Holzstab versehen ist. Diese Holzstäbe sind sehr zweckmäßige Einrichtungen, die eine Reihe
von Funktionen erfüllen: Im aufgehängten Zustand dienen
die Stäbe als Spannvorrichtungen, wobei die Karte entlang der Stäbe in gespanntem Zustand festliegt und der untere Stab durch sein Gewicht die vertikale Spannung erzeugt. Am oberen Holzstab kann einfach eine Aufhängevorrichtung angebracht werden. Für die Aufbewahrung der Karte wird diese um einen der Stäbe gerollt, wodurch ein fester Innenkern entsteht, der die Karte vor Beschädigungen, insbesondere einem Abknicken, schützt. Eine Karte kann somit platzsparend als Rolle aufbewahrt werden. Aufgrund dieser Vorteile ist auch die erfindungsgemäße Wandhängekarte mit solchen Stäben versehen.

Bisher werden Wandhängekarten für Schulen aus einer Reihe von Materialien angeboten:

In der einfachsten Ausführung sind die Karten lediglich auf Papier gedruckt und mit den beiden vorgenannten Holzstäben versehen. Eine solche Karte hat nur eine geringe Lebensdauer und ist dem rauhen Schulbetrieb keinesfalls gewachsen. Sie reißt sehr leicht, besonders an den Holzstäben, ein, bekommt Knickfalten und wird insgesamt schnell durch Verschmutzung und Verschleiß unansehnlich und unbrauchbar. Auch für den Daueraushang, bei dem weniger Verschleiß eintritt, sind diese Karten nur für kurze Zeit geeignet, da besonders bei Sonneneinstrahlung die Farben sehr schnell ausbleichen und die Karten somit ihre optische Einprägsamkeit verlieren.

Um demgegenüber eine Verbesserung zu erreichen, ist es seit langem bekannt, bei Schulwandkarten einseitig bedruckte Papierkarten auf einen Träger aus Leinen aufzubringen. Dadurch wird die mechanische Belastbarkeit zwar erhöht, die Reißfestigkeit ist jedoch dennoch nicht genügend hoch. Nach öfterer Benutzung reißen auch diese Karten, besonders entlang der Holzstäbe, ein, was zu relativ teueren Kartenreparaturen führt. Die Klebeverbindung zwischen dem Leinenträger und der bedruckten Papierbahn ist in manchen Fällen nicht fest genug, so daß sich unerwünschte Risse bilden und teilweise Stücke der Papierbahn von dem Leinenträger abfallen. Bezüglich des Ausbleichens gelten hier ebenfalls die vorstehenden Ausführungen, da auch hier die bedruckte Seite der Papierbahn gegenüber dem Lichteinfall, insbesondere der UV-Strahlung, ungeschützt ist.

Es ist auch bekannt, die Papierkarten oder die auf Leinen aufgezogenen Papierkarten an ihrer Vorderseite mit einer durchsichtigen Kunststoffschutzfolie zu bekleben. Solche einseitig mit Kleberfolie versehenen Schutzfolien (entsprechend dem Tesafilm) sind für rollbare Karten aufgrund der Spannungen in den Klebeflächen, die beim Zusammenrollen bzw. im gerollten Zustand und im aufgehängten Zustand auftreten, nur bedingt geeignet, da sich die Folie oftmals an verschiedenen Flächenbereichen ablöst. Dies führt zu einer unansehnlichen Blasenbildung, wobei diese Blasen teilweise eng aneinanderliegend die gesamte Karte bedecken. Dadurch wird das Erkennen der Kartenaufdrucke erschwert und je nach Größe der Blasen unmöglich gemacht. Zusätzlich ist das Aufbringen der Folien ziemlich arbeitsaufwendig und teuer.

Es werden auch Karten angeboten, die direkt auf ein Plastikfolienmaterial gedruckt sind. Diese Karten sind sehr empfindlich gegen Knicken und reißen an diesen Stellen leicht ein und bleichen bei längerer Lichteinwirkung sehr schnell aus. Durch das gegenüber Papierdrucken aufwendigere Verfahren des Plastikdrucks und des teureren Trägermaterials sind solche Karten ohnehin relativ teuer.

Aufgabe der Erfindung ist es demgegenüber, Wandhängekarten, insbesondere Landkarten, sowie Lehr- und Lerntafeln für Schulen zu schaffen, die bei hoher Reißfestigkeit und einem hohen Schutz gegen Ausbleichen und Verschmutzung eine lange Lebensdauer aufweisen, preisgünstig sind und für Lehrer und Schüler einen guten Gebrauchswert besitzen.

0155650

Diese Aufgabe wird bei einer gattungsgemäßen Wandhängekarte gemäß Anspruch 1 dadurch gelöst, daß auf einer wenigstens einseitig bedruckten Papierbahn an deren Vorder- und Rückseite eine Deckschicht aus durchsichtigem und flexiblen Kunststoff aufkaschiert ist.

Gemäß Anspruch 2 soll diese Deckschicht auch die Schmalseite der Papierkarte umschließen, so daß diese vollständig eingeschlossen ist.

Dadurch wird erreicht, daß die Reißfestigkeit wesentlich erhöht wird. Im normalen, rauhen Schulbetrieb konnte kein Einreißen der Karten, auch nicht an den Stäben, beobachtet werden, so daß eine erfindungsgemäße Karte nur mehr durch eine willkürliche Beschädigung (Zerschneiden, Durchbohren mit spitzem Gegenstand, etc.) zerstört werden kann. Dadurch fallen teuere Kartenreparaturen praktisch weg. Wesentlich ist, daß die Kaschierung auch auf der Rückseite der Karte erfolgt. Dadurch wird zum einen die Reißfestigkeit in der vorstehenden Weise erhöht, zugleich ist die Karte aber auch von ihrer Rückseite her gegen Verschmutzungen und Feuchtigkeit geschützt. Dadurch können keine Feuchtigkeits- oder Schmutzflecken oder -ränder nach vorne durchscheinen und so die Karte unansehnlich und unbrauchbar machen. Weiter kann dadurch keine Ablösung der Papierschicht von der vorderen Kunststoffschicht eingeleitet werden.

Ein weiterer Vorteil der beidseitigen Aufkaschierung besteht darin, daß eine Papierbahn beidseitig bedruckbar ist, z. B. könnte auf der Vorderseite eine politische Landkarte und auf der Rückseite eine physikalische Landkarte des gleichen Gebietes aufgedruckt sein. Die Landkarte kann dann je nach Erfordernis einfach umgedreht werden, wobei beide Seiten in der gleichen Weise geschützt sind.

Falls die Papierbahn jedoch nur einseitig bedruckt ist, ist es zweckmäßig, die Rückseite der Papierbahn weiß zu belassen. Damit kann einfach durch Umdrehen der Karte eine Projektionswand zur Verfügung gestellt werden.

Durch den Kunststoffüberzug sind die Druckfarben geschützt, so daß die Karten auch bei Sonneneinstrahlung nicht mehr verblassen und ausbleichen.

Die Karten sind sowohl mit Wasser löslichen und mit wasserfesten Folienstiften beschreibbar und können einfach mit Wasser oder Spiritus wieder abgewaschen werden. Damit kann eine erfindungsgemäße Wandkarte von Lehrern und Schülern als aktives Arbeitsmittel mit in den Unterricht einbezogen werden, wobei durch Markierungen mit Folienstiften Einzelheiten eingezeichnet oder hervorgehoben werden können.

Ein weiterer Vorteil besteht in der elektrostatischen Haftung von Projektorfolien auf der Kunststoffschicht der erfindungsgemäßen Wandkarten. Auch dadurch können beispielsweise leicht Konturen abgenommen werden und Einzelheiten auf Projektorfolien übertragen werden.

Anhand eines Ausführungsbeispiels wird die Erfindung mit weiteren Merkmalen, Einzelheiten und Vorteilen näher erläutert.

Es zeigen

Fig. 1    eine Wandhängekarte,

Fig. 2    einen Schnitt durch die Wandhängekarte gemäß Fig. 1 entlang der Linie A-A, wobei die Dicke vergrößert dargestellt ist.

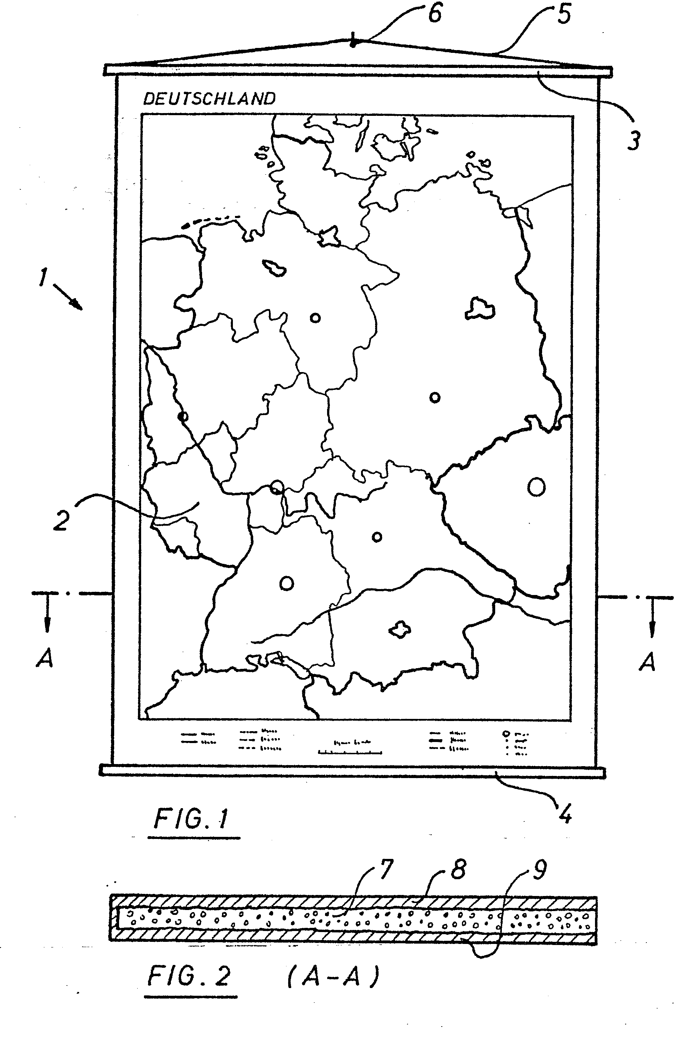

In Fig. 1 ist eine Wandhängekarte 1 gezeigt, die aus einem bedruckten Kartenteil 2 und einem daran befestigten oberen Holzstab 3 und einem unteren Holzstab 4 besteht. Der obere Holzstab 3 trägt eine Aufhängevorrichtung 5 in der Form einer Aufhängekordel.

Im dargestellten entrollten und aufgehängten Zustand hängt die Wandkarte 1 mit der Aufhängevorrichtung 5 an einem Nagel 6, wobei die Holzstäbe 3, 4 das Aufspannen des bedruckten Kartenteils 2 bewirken.

Fig. 2 zeigt einen Schnitt durch die Wandhängekarte 1 entlang der Linie A-A (der Übersichtlichkeit wegen sind die Materialstärken vergrößert dargestellt). In der Mitte ist eine Papierbahn 7 zu erkennen, auf die an der Vorderseite und Rückseite jeweils eine Deckschicht 8 und 9 aus einem durchsichtigen und flexiblen Kunststoff aufkaschiert ist.

Das Aufkaschieren erfolgt so, daß auf die Papierbahn beidseitig heißer und verflüssigter Kunststoff aufgebracht wird. Die Papierbahn wird dann durch gegenüberliegenden Walzen bewegt, die einen Abstand entsprechend der gewünschten Materialstärke einschließlich der aufkaschierten Deckschichten haben. Dadurch wird eine gleichmäßige Schichtdicke und zugleich eine glatte Oberfläche erzielt, wobei gleichzeitig der Kunststoff abkühlt, aushärtet und mit der Papierbahn eine feste unlösbare Verbindung bildet.

In Fig. 2 ist am linken Rand eine Ausführungsform gezeigt, bei der die Papierbahn 7 auch an ihrer linken Schmalseite von einer Kunststoffdeckschicht umschlossen ist. An der rechten Seite ist eine Ausführungsform dargestellt, bei der nur die Deckschichten 8, 9 an der Vorder- und Rückseite der Papierbahn angebracht sind bzw. wie das Material nach einem nachträglichen Zuschnitt an einer Kante aussieht.

7

0155650

Insgesamt wird festgestellt, daß mit der Erfindung eine Wandhängekarte, insbesondere Landkarte, sowie Lehr- und Lerntafel für Schulen aufgezeigt wurde, die eine wesentliche Verbesserung bezüglich der Reißfestigkeit, der Verschmutzung, der Lebensdauer, der Preiswürdigkeit und des Gebrauchswerts darstellt.

# DIPL.-PHYS. HANS-J. NEUBAUER
## EUROPEAN PATENT ATTORNEY

Fauststraße 30
D-8070 Ingolstadt

Telefon (08 41) 7 24 12
Telegramm neupat Ingolstadt
Telex 5 5809 nepa d

**0155650**

Herr

Heinrich Stiefel

Fichtenstr. 9

8071 Ernsgaden

P 69ST 85/13

## Ansprüche

1. Wandhängekarten, insbesondere Landkarten, sowie Lehr- und Lerntafeln für Schulen

   mit einer wenigstens einseitig bedruckten Papierbahn und

   mit an gegenüberliegenden Seiten der Papierbahn angebrachten, mit der Papierbahn verbundenen und sich etwa über die gesamte Seitenlänge erstreckenden Stäben, wovon ein Stab mit einer Aufhängevorrichtung versehen ist,

   dadurch gekennzeichnet,

   daß auf die Papierbahn (7) an ihrer Vorder- und Rückseite je eine Deckschicht (8, 9) aus durchsichtigem und flexiblen Kunststoff aufkaschiert ist.

2. Wandhängekarten, insbesondere Landkarten, sowie Lehr- und Lerntafeln für Schulen nach Anspruch 1, dadurch gekennzeichnet, daß die Deckschicht auch die Schmalseite der Papierkarte umschließt, so daß diese vollständig eingeschlossen ist.

DEUTSCHLAND

**FIG. 1**

**FIG. 2   (A-A)**

P 69ST 85/13